# EUROPEAN PATENT APPLICATION

(11) **EP 0 864 349 A2**
(43) Date of publication of application: **16.09.1998**
(21) Application number: 98301958.9
(22) Date of filing: 16.03.1998
(51) Int. Cl.: B01D 53/00

(54) **A process and apparatus for treating gas**

(30) Priority: 14.03.1997 GB 9705338
(71) Applicant: THAMES WATER UTILITIES LIMITED, Reading Berks. RG1 8DB (GB)
(72) Inventor: Asaadi, Manocher, Reading, Berks, RG2 0JN (GB)
(74) Representative: Jacob, Reuben Ellis

(57) **Abstract**

The invention relates to an apparatus 1 for treating a gaseous product of combustion in a furnace 2, comprising means 3 to heat the gascous product and raise its temperature whereby to form a thermochemically "lighter" product.

## Description

The invention relates to a process and apparatus for treating a gas, particularly a gaseous product of combustion from a furnace, such as a rotary furnace.

Rotary furnaces are often used in a variety of applications, for example for metal roasting, catalyst regeneration, china clay calcining, production of synthetic gases. It will be understood that a rotary furnace generally comprises a tube or cylinder mounted for rotation in a refractory housing. The tube is usually heated by external burners which utilise a mixture of air and fuel, which can be a gaseous fuel or a liquid fuel.

Such a rotary furnace has been used in the destruction of sewage screenings by pyrolysis, that is incineration in the total absence, or presence, or to a low level, of oxygen. Formerly this process produced an oil, which can be used as a fuel for the process. However, an environmentally more acceptable product of treatment of sewage screenings is produced if they are destroyed using a higher temperature than hitherto, and this treatment produces instead of oil, a gaseous product of combustion which is generally a gaseous mixture of hydrogen, methane, carbon monoxide, carbon dioxide, heavier hydrocarbons, as well as some tar and oil. Although the rotary furnace tube is heated usually to a temperature of about 900°C, and the destroyed sewage screenings in the form of ash may reach this temperature, the gaseous product, with some tar and oil, is generally lower in temperature, sometimes as much as several hundred degrees lower. The gaseous product is then a "dirty" gas which is environmentally unfriendly in that it burns with a yellow flame and is not suitable for subsequent use as a fuel for the furnace burner or for power production.

It is accordingly an object of the invention to seek to mitigate these disadvantages.

According to a first aspect of the invention there is provided a process for treating a gaseous product of combustion from a furnace, comprising the step of raising the temperature of the gaseous product whereby to convert it to chemically lighter component(s).

This temperature raising step may comprise a step of re-cycling the gaseous product through the furnace. This provides an efficient process, particularly when the step of raising the temperature may comprise utilising waste heat from the furnace.

There may be the step of adding an additive to the gaseous product prior to the step of raising the temperature thereof. This provides a synthesis gas.

The additive may comprise a mixture of oxygen and water, suitably a mixture comprising air and steam.

The process may be carried out utilising a rotary furnace, and the gaseous product may be recycled through a housing in which the rotary furnace is mounted for rotation. This provides a relatively simple process.

The treated gaseous product may comprise at least a part of the fuel for the rotary furnace. This provides an efficient utilisation of heat and gaseous product.

The step of raising the temperature of the gaseous product may comprise raising the temperature to at least 700°C, suitably to a temperature in the range 700°C - 900°C. This provides for a thermal cracking of the gaseous product.

There may be the step of washing the gaseous product prior to the step of raising the temperature. This step can remove harmful abrasive or corrosive constituents of the gaseous product.

According to a second aspect of the invention there is provided apparatus for treating a gaseous product of combustion from a furnace, comprising a heating device downstream of the furnace and means to pass the gaseous product through the heating device whereby to raise the temperature thereof.

The furnace may comprise a rotary furnace. This provides an efficient apparatus.

The heating device may comprise part of a housing in which the rotary furnace is mounted for rotation. This construction is relatively simple, particularly where the heating device may comprise a conduit through which the gaseous product can pass.

The conduit may comprise a sinuous tube in the part of the housing. This provides for an extensive treatment length.

The conduit may be connected with a gas outlet from the furnace. This provides for recycling.

The conduit may be connected downstream of the sinuous tube with a power generator and/or fuel burners for heating the rotary furnace. This provides for efficient utilisation of the treated gaseous product. There may be means to add an additive to gaseous product in the conduit which may suitably comprise an injector for a mixture of oxygen and water, suitably an air and steam mixture. This provides for production of synthesis gas.

The heating device may comprise a retro-fil device adapted to be installed in an existing furnace installation.

There may be means to clean or cool the gaseous product of partial combustion prior to passage to the heating device.

It will be understood that the invention extends to a gaseous produce whenever treated in a process as hereinbefore defined or in apparatus as hereinbefore defined.

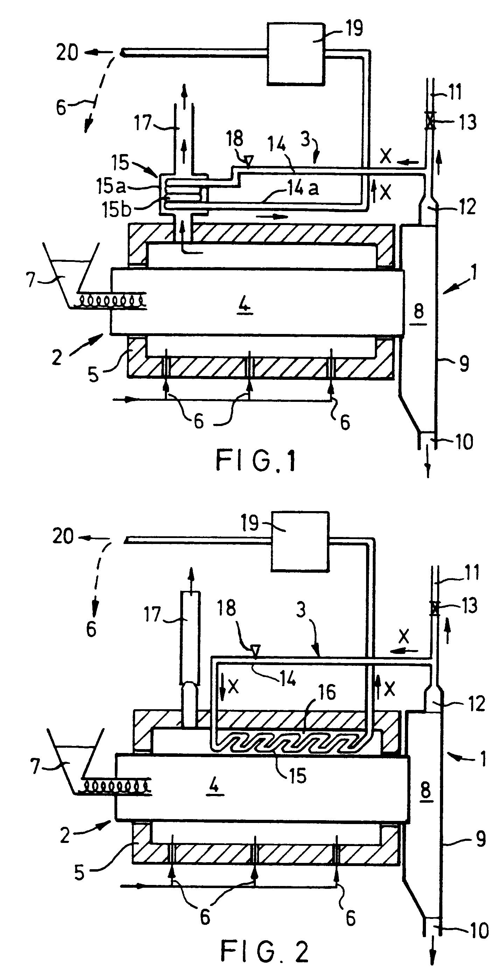

The invention will be Further described, hereinafter by way of example, with reference to the accompanying drawings, in which Fig. 1 shows schematically in side elevation a rotary furnace according to a first embodiment of the invention for carrying out a process according to the invention; and

Fig. 2 shows schematically in side elevation a rotary furnace according to a second embodiment of the invention for carrying out a process according to the invention.

Referring to Fig. 1 there is shown apparatus 1 for treating a gaseous product of combustion in a furnace 2, comprising means 3 to heat the gaseous product and raise its temperature whereby to form a thermochemically "lighter" product.

The furnace 2 is a rotary furnace comprising a tube or cylinder 4 mounted in a refractory housing 5 and heated externally by burners 6 which burn a mixture of air and fuel, usually gaseous fuel. The furnace 2 is used in the embodiment to treat sewage screenings, which are fed to the tube 4 at one inlet end from a feed hopper 7. The tube 4 is inclined downwardly from left to right as viewed so that the sewage screenings pass through the furnace 2 from the inlet at the feed hopper end to an outlet 8 at the opposite end as the tube 4 rotates. The burners 6 heat the tube indirectly, and hence the sewage screenings, to about 900°C in the embodiment. The screenings or heating produce a gaseous product of combustion and ash. The ash on passing out of the outlet 8 is received in a collector 9 and passes down to an outlet 10 thereof for subsequent disposal. The gaseous product passes upwardly out of the collector 9 to a flue stack or chimney 11 past a washer 12 in the base of the stack 11 to clean the gas. The clean gas is however one which contains heavy hydrocarbon constituents and tar and oil. A major proportion of the gas is therefore cycled from the stack 11 by operation of a valve 13 through the means 3 in the form of a conduit 14 which includes a heat exchanger 15 which may be inside or outside (as illustrated) refractory housing 5, which is heated by waste heat from burners 6, which then exits up flue 17. The heat exchanger 15 comprises a hollow body or shell 15a, having an inlet and an outlet in communication with the flue 17. Within the shell 15a are a plurality of tubes 15b, which are in communication with conduits 14 and 14a. Thus, the gas from the stack passes through the tubes which are fabricated from a suitable material such as a metal, for gas to gas heat transfer to occur from the flue gas. The heat exchanger 15 provides for a much longer path for the gas and enables the gaseous product to be treated by being heated up to the temperature of the furnace, viz about 900°C in the embodiment. Thus the gaseous product from the furnace 4 is elevated in temperature to about 900°C, cracked and reformed to provide lighter hydrocarbons.

Stated in another way the heavy hydrocarbons including oils and tars as well as gas in the gaseous product exiting the rotary furnace 4 are converted to lighter gas components, thereby obviating the condensation of tars and oils, and providing a fuel gas which after exiting the heat exchanger and passage through a cleaning or cooling device 19, can be passed to a point 20 of separate power generation or can be recycled to the burners 6 for providing fuel therefor.

There is shown a device 18 for the addition by injection of a mixture of oxygen or air and water or steam prior to the passage of the gaseous product to the heat exchanger 15 for thermal cracking, for the production and reformation of the gas into a synthesis gas comprising hydrogen and carbon monoxide. The injection means shown is an option.

The passage of the gaseous product is shown by the arrows `X'.

It will be understood that the conduit system 3 shown including the heat exchanger 15 can be an addition, or retrofit, to an existing rotary or other furnace installation 2, or can be incorporated in a new rotary, or other, furnace during construction.

Referring to Fig. 2 there is illustrated apparatus 1 for treating a gaseous product of combustion in a furnace 2, comprising means 3 to heat the gaseous product and raise its temperature whereby to form a thermochemically "lighter" product.

The apparatus 1 consists generally of corresponding parts to those of the Fig. 1 embodiment. However, in this embodiment a further example of means 3 to heat the gaseous product is illustrated. In this embodiment the means 3 comprises a sinuous tube 15 which extends over a substantial length of a part 16 of the housing 5, which is heated by waste heat from the burners 6, which then exits up the flue 17. The sinuous tube 15 provides for a much longer path for the gas than the length of the housing part 16 and enables the gaseous product to be treated by being heated up to the temperature of the furnace, viz. about 900°C in the embodiment.

In each embodiment, the system provides a secondary thermal gas cracker for converting gaseous products of combustion to lighter components.

## Claims

1. A process for treating a gaseous product of combustion from a furnace, characterised by the step of raising the temperature of the gaseous product whereby to convert it to chemically lighter component(s).

2. A process according to Claim 1, characterised by the temperature raising step comprising a step of re-cycling the gaseous product through the furnace.

3. A process according to Claim 1 or Claim 2, characterised by the step of raising the temperature comprising utilising waste heat from the furnace.

4. A process according to any preceding claim, characterised by the step of adding an additive to the gaseous product prior to the step of raising the temperature thereof.

5. A process according to Claim 4, characterised by the additive comprising a mixture of oxygen and water.

6. A process according to Claim 5, characterised by the mixture comprising air and steam.

7. A process according to Claims 2 to 6, characterised by being carried out utilising a rotary furnace, the gaseous product being recycled through a housing in which the rotary furnace is mounted for rotation.

8. A process according to Claim 7, characterised by the treated gaseous product comprising at least a part of the fuel for the rotary furnace.

9. A process according to any preceding claim, characterised by the step of raising the temperature of the gaseous product comprising raising the temperature to at least 700°C.

10. A process according to Claim 9, characterised by the temperature being raised to a temperature in the range 700°C - 900°C.

11. A process according to any preceding claim, characterised by the step of washing the gaseous product prior to the step of raising the temperature.

12. Apparatus (1) for treating a gaseous product of combustion from a furnace (2), characterised by a heating device (3) downstream of the furnace (2) and means (14, 15) to pass the gaseous product from the furnace through the heating device whereby to raise the temperature thereof.

13. Apparatus according to Claim 12, characterised by the furnace comprising a rotary furnace.

14. Apparatus according to Claim 13, characterised by the heating device comprising part of a housing in which the rotary furnace is mounted for rotation.

15. Apparatus according to Claim 14, characterised by the heating device comprising a conduit through which the gaseous product can pass.

16. Apparatus according to Claim 13 or Claim 14, characterised by the heating device comprising a heat exchanger.

17. Apparatus according to Claim 16, characterised by the conduit comprising a sinuous lube in the part of the housing.

18. Apparatus according to Claim 17, characterised in that the conduit is connected with a gas outlet from the furnace.

19. Apparatus according to Claim 18, characterised in that the conduit is connected downstream of the sinuous tube with a power generator and/or fuel burner for heating the rotary furnace.

20. Apparatus according to any of Claims 16 to 19, characterised by means to add an additive to gaseous product in the conduit.

21. Apparatus according to Claim 20, characterised by the means to add an additive comprising an injector for a mixture of oxygen and water.

22. Apparatus according to Claim 21, characterised by the injector being an injector for an air and steam mixture.

23. Apparatus according to any preceding claim, characterised by the heating device comprising a retro-fit device adapted to be installed in an existing furnace installation.

24. Apparatus according to any preceding claim, characterised by means to wash the gaseous product of combustion prior to passage to the heating device.

25. A gaseous product of combustion from a furnace, whenever treated by a process according to Claims 1 to 11 or in apparatus according to any of Claims 12 to 24.
